# EUROPÄISCHE PATENTSCHRIFT

(11) **EP 0 615 006 B1**
(45) Veröffentlichungstag und Bekanntmachung des Hinweises auf die Patenterteilung: **16.04.1997**
(21) Anmeldenummer: 93116527.8
(22) Anmeldetag: 13.10.1993
(51) Int. Cl.: D01D 1/06, F16K 11/00

(54) **Verteiler für viskose Flüssigkeiten mit regelbaren, multiplen Ausgängen**
Distributor for viscous fluids with adjustable multiple discharge
Distributeur pour liquides visqueux à décharge multiple et réglable

(30) Priorität: 12.03.1993 US 30645
(43) Veröffentlichungstag der Anmeldung: 14.09.1994
(73) Patentinhaber: Zimmer Aktiengesellschaft, D-60388 Frankfurt (DE)
(72) Erfinder: Schnaus, Walter, D-63517 Rodenbach (DE); Finkeldei, Ferdinand, D-60388 Frankfurt/Main (DE); Cermak, Dieter, D-61381 Friedrichsdorf (DE); Metzger, Walter, D-63477 Maintal (DE)

(56) Entgegenhaltungen:
- EP-A- 0 048 527
- AT-B- 382 941
- FR-A- 2 133 565
- US-A- 3 724 492

## Beschreibung

Die Erfindung bezieht sich auf einen Verteiler für viskose Flüssigkeiten, welcher eine Zuleitung und eine Mehrzahl von mit je einem Ventil bestückten Ausgangsleitungen umfaßt. Insbesondere betrifft die Erfindung eine Vorrichtung zum Verteilen von Polymerschmelze auf eine Mehrzahl von Schmelzspinneinheiten oder vergleichbaren Extrusions-Einheiten.

Bei der Herstellung von Filamenten oder ähnlichen Produkten muß die über eine einzige Leitung vom Polykondensationsreaktor oder einer Granulat-Schmelzvorrichtung zugeführte Polymerschmelze auf eine Vielzahl von Spinneinheiten oder vergleichbaren Extrusionseinheiten verteilt werden. Die jeder dieser Einheiten zugeführte Menge an Polymerschmelze sollte mit hoher Genauigkeit regelbar sein. Desweiteren sind Toträume innerhalb des Verteilers zu vermeiden, da eine längere Verweilzeit eines Teils des Polymers zur Zersetzung des Polymers bis hin zu unlöslichen, vernetzten Produkten führt.

Der im US-Patent 3 724 492 beschriebene Verteiler sieht eine in sich geschlossene Ringleitung vor, die die Aufrechterhaltung einer ununterbrochenen, geringen Strömung der Polymerschmelze bei geschlossenen Ventilen ermöglicht. Solange die Ventile geschlossen sind, zirkuliert die gleiche Polymermenge in der Ringleitung, ohne Austausch durch neues Produkt. Diese verlängerte Verweilzeit führt aber ebenfalls zur Zersetzung und Vernetzung des in der Ringleitung zirkulierenden Polymers, welches nach Wiederöffnen der Ventile den gesamten Bereich zwischen Verteiler und Spinneinheit verunreinigt. Auch sind bei geöffneten Ventilen Toträume nicht völlig ausgeschlossen. Ferner lassen sich Zwischenpositionen der Ventile zwecks Regelung der Strömungsgeschwindigkeit nur ungenau einstellen.

Aufgabe der vorliegenden Erfindung ist es daher, einen Verteiler für viskose Flüssigkeiten mit multiplen Ausgängen zur Verfügung zu stellen, der die zuvor genannten Nachteile nicht oder zumindest in geringerem Umfang aufweist. Insbesondere sollte der Verteiler frei von Toträumen sein, sowohl bei geschlossenen als auch bei geöffneten Ventilen, und die Polymerströmung von der Zuleitung zu den Ausgangsleitungen sollte mit hoher Genauigkeit regelbar sein.

Die Lösung dieser Aufgabe erfolgt erfindungsgemäß durch einen Verteiler gemäß den Angaben der Patentansprüche. Dieser Verteiler besteht aus einer Zuleitung und damit verbunden, einer Mehrzahl von Ausgangsventilen und -leitungen, wobei jedes Ventil eine in axiale Richtung bewegliche Ventilspindel aufweist und senkrecht zu der jeweiligen Ausgangsleitung angeordnet ist. Das Ventilgehäuse, genauer der als Führungszylinder ausgebildete Teil des Gehäuses, ist an der gegenüber der Verbindung mit der Ausgangsleitung liegenden Stelle zu einem elliptischen Querschnitt exzentrisch erweitert, wobei der Übergang vom kreisförmigen zum elliptischen Querschnitt allmählich erfolgt. Die Ventilspindel hat einen tellerförmigen Ventilkopf mit einem pilzförmigen Aufsatz, der dazu dient, die Flüssigkeit im Spalt zwischen Ventilspindel und Gehäusewandung zu verteilen. Die geometrischen Abmessungen des Verteilers unterliegen den nachfolgend spezifizierten Relationen.

Die Erfindung wird im folgenden an Hand der Zeichnungen erörtert, wobei
- Fig. 1: einen Längsschnitt eines erfindungsgemäßen Verteilerventils einschließlich der zentralen Zuleitung und der radialen Ausgangsleitung sowie der Ventilspindel bei geschlossenem Ventil, und zusätzlich gestrichelt bei geöffnetem Ventil;
- Fig. 2: eine Draufsicht auf einen Verteiler mit zentraler Zuleitung und mehreren radialen, in geschlossener Position dargestellten Ausgangsventilen;
- Fig. 3: einen vergrößerten Längsschnitt eines erfindungsgemäßen, mit einem Heizmantel versehenen Ventils;
- Fig. 4: eine schematische Darstellung der Strömungsrichtung in einem Verteiler mit einer Mehrzahl radialer Ausgangsleitungen;
- Fig. 5: eine schematische Darstellung der Strömungsrichtung in einem Verteiler mit einer Mehrzahl nebeneinanderliegender Ausgangsleitungen
zeigt.

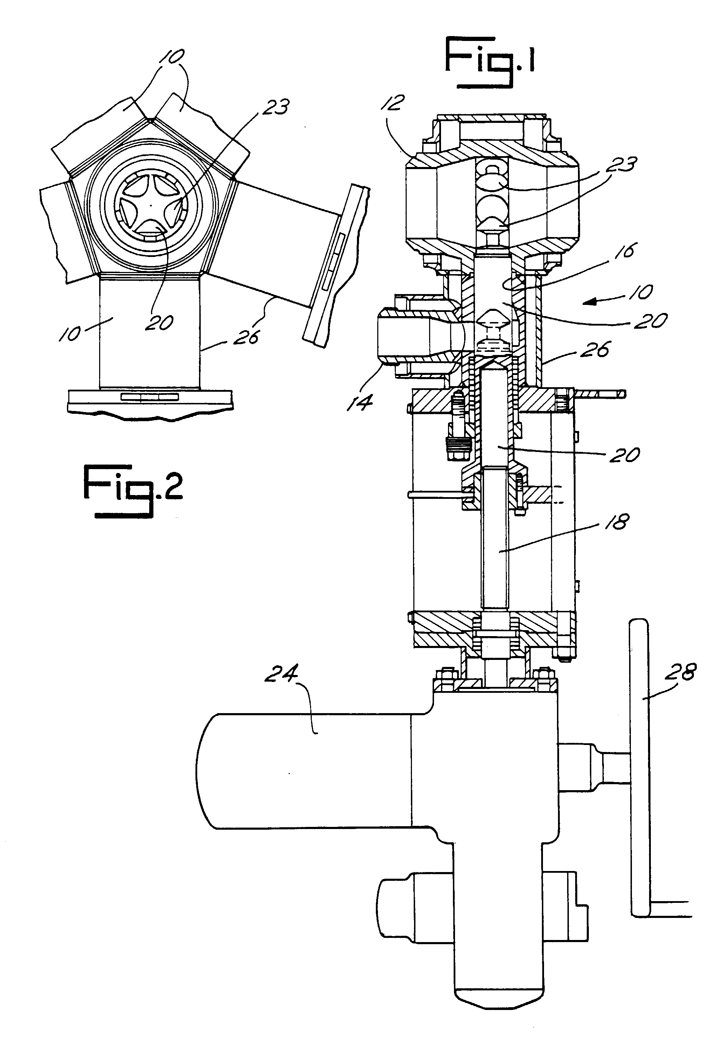

In Fig. 1 ist ein an die zentrale Zuleitung (12) radial angeschlossenes Ventil (10) dargestellt. Wie aus Fig. 2 ersichtlich, umgeben fünf solcher Ventile (10) sternförmig die zentrale Zuleitung (12). In die Wandung der Zuleitung (12) sind fünf, mit gleichem Abstand zueinander, um die Zuleitung (12) herum angeordnete Ventilsitze (22) eingelassen, in die die Ventilspindeln (20) eingreifen, und so die Strömung von der Zuleitung (12) zu den von den Ventilen (10) abgehenden Ausgangsleitungen (14) unterbrechen. Die Strömung von der Zuleitung (12) ist radial und dreht in den Ausgangsleitungen (14) um 90° von der Papierebene weg. Um den inneren Aufbau des Ventils (10) besser zu zeigen, ist in Fig. 1 die Zuleitung (12) um 90° zu ihrer eigentlichen Lage gedreht dargestellt. Die Spindel (20) ist mit einer Antriebsspindel (18) und diese mit dem Antriebsmotor (24) verbunden, der die Spindel (20) innerhalb des Führungszylinders (16) von der geöffneten bis zur geschlossenen Ventilposition bewegt. Ein Stellrad (28) dient der Einstellung der Spindel (20) in bezug auf den Ventilsitz (22) innerhalb des Führungszylinders (16). In Fig. 1 ist die Spindel (20) auf dem Ventilsitz (22) in geschlossener Position des Ventils und zusätzlich gestrichelt in offener Position dargestellt.

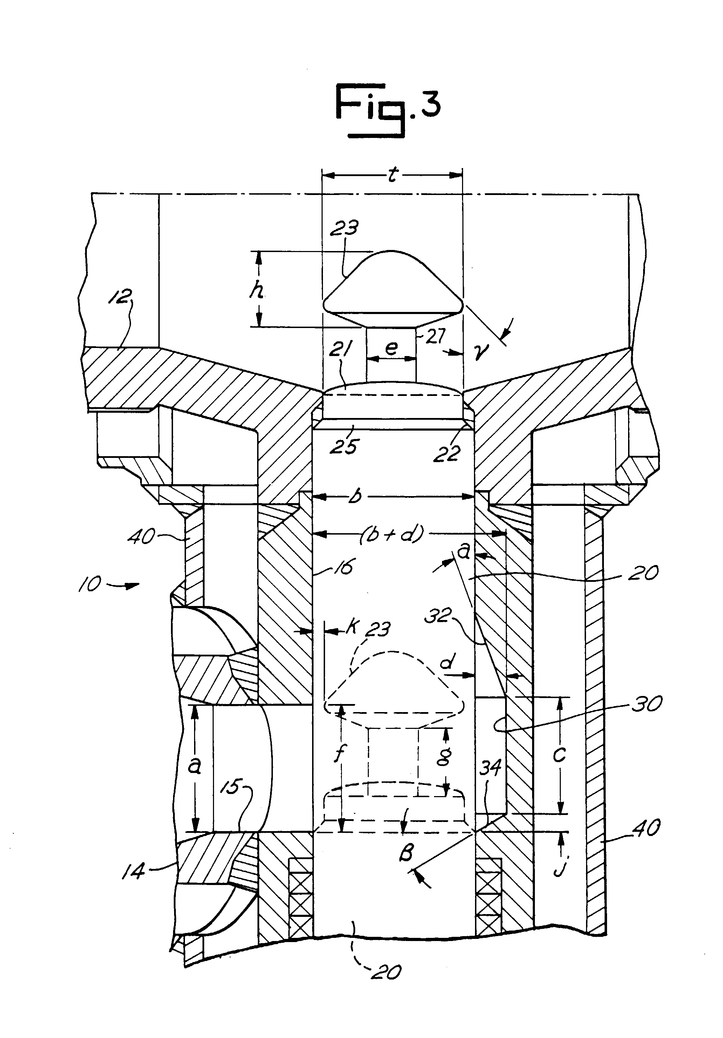

Fig. 3 zeigt, daß der als Führungszylinder (16) ausgebildete Teil des Ventilgehäuses an der der Ausgangsleitung (14) gegenüberliegenden Stelle zu einem elliptischen Querschnitt (30) erweitert ist, wobei der maximale Durchmesser (b + d) über die axiale Länge c beibehalten wird. Anstelle eines elliptischen Querschnitts kann auch ein etwas anderer, aus zwei Kreissegmenten bestehender Querschnitt treten. Die Übergangszonen (32) und (34) zwischen dem kreisförmigen Querschnitt und dem maximalen elliptischen Querschnitt (30) verlaufen allmählich und bilden mit der Wandung des Zylinders (16) auf der Zuleitungsseite einen Winkel α und auf der anderen Seite einen Winkel (90°-β). Bevorzugt beträgt der Winkel *α* etwa 20° und der Winkel β etwa 30°. Die Tiefe d des erweiterten Bereiches ist gleich (0,1 bis 0,2) . b, vorzugsweise 0,165 · b. Die Länge c entspricht etwa (0,8 bis 1,0) · a, vorzugsweise 0,92 · a, wobei a der Durchmesser der Ausgangsöffnung (15) ist. Der der Länge c entsprechende, erweiterte Bereich (30) liegt der Ausgangsöffnung (15) gegenüber und reicht in axialer Richtung auf der Zuleitungsseite ein wenig weiter als diese Öffnung (15). Der Übergangsbereich (34) sollte kurz sein, jedoch mit einer Neigung, die ein ungehindertes, gleichmäßiges Fließen der viskosen Flüssigkeit erlaubt. Anstelle des dargestellten trapezförmigen Querschnitts kann der erweiterte Bereich (30) auch eine leicht gekrümmte Form aufweisen.

Die in axialer Richtung bewegliche Ventilspindel (20) trägt einen konventionellen, tellerförmigen Ventilkopf (21), dessen abgeschrägte Fläche (25) dem Ventilsitz (22) an dem radialen Abzweigungspunkt der Zuleitung (12) angepaßt ist. Die Höhe des Ventilkopfes wird von der notwendigen Belastung des Ventilsitzes bestimmt und sollte möglichst gering sein.

Dieser konventionelle Ventilkopf (21) trägt erfindungsgemäß einen pilzförmigen Aufsatz mit einem Fuß (27) und einer Kappe (23). Die Gesamthöhe f von der Basis (25) des Ventilkopfes bis an die Stelle, an der die Kappe (23) ihren größten Durchmesser t aufweist, ist etwa gleich (1,0 bis 1,05) · a und der maximale Durchmesser t etwa gleich (0,75 bis 0,95) · b. Vorzugsweise weist der pilzförmige Aufsatz etwa folgende Maße auf:

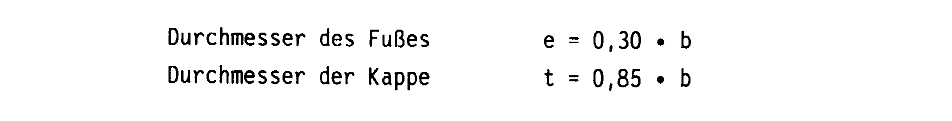

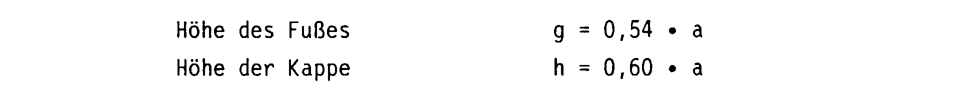

wobei die Kappe an ihrer Oberseite einen Winkel γ von 45° mit der Achse des Führungszylinders (16) bildet und sowohl an der oberen Spitze als auch an der dem Durchmesser t entsprechenden Peripherie abgerundet ist.

Wie aus Fig. 3 ersichtlich, erstreckt sich der pilzförmige Aufsatz bei geschlossenem Ventil frei in die Zuleitung (12). Bei geöffnetem Ventil (gestrichelte Linien) befindet sich der Ventilkopf mit Aufsatz auf der Ebene der Ausgangsöffnung (15). Die Form des Ventilkopfes (21) und der Kappe (23) des Aufsatzes kann von der angegebenen etwas abweichen, totraumbildende Winkel, insbesondere an der Oberseite des Ventilkopfes (21) und an der Unterseite der Kappe (23) sind aber auszuschließen. Die viskose Flüssigkeit wird bei geöffnetem Ventil, auf ihrem Weg von der Zuleitung (12) zu der Ausgangsleitung (14), über den Querschnitt des Führungszylinders (16) durch die Kappe (23) des Aufsatzes verteilt. Beim elliptischen Querschnitt (30) des Ventilgehäuses in Höhe der Ausgangsöffnung (15) vergrößert sich der Spalt zwischen Kappe (23) und Gehäusewandung von der Spaltbreite k auf der Ausgangsseite bis hin zur Spaltbreite (k + d) auf der gegenüberliegenden Seite. Folglich ist die Strömung der viskosen Flüssigkeit auf der erweiterten Seite (30) größer und der Spüleffekt hier intensiver als auf der Ausgangsseite. Dieser verbesserte Spüleffekt kompensiert die Tendenz der Flüssigkeit, auf dieser Seite des Ventilgehäuses zu stagnieren. Je nach Spaltbreite liegt das Verhältnis der Strömung auf der der Ausgangsöffnung (15) gegenüberliegenden Seite zu der Strömung auf der der Ausgangsöffnung (15) benachbarten Seite im Bereich von 1,1 bis 2,5, vorzugsweise bei etwa 2,0. Durch axiales Verschieben der Spindel (20) in Richtung des Ventilsitzes (22), wodurch die Breite des Spaltes auf der der Ausgangsöffnung (15) gegenüberliegenden Seite, nämlich der Abstand zwischen Kappe (23) und dem Wandungsbereich (32), proportional zum Winkel *α* abnimmt, lassen sich das Verhältnis der Teilströme und die Gesamtströmung auf Zwischenwerte einstellen. Ihre Grenzen erreicht diese Einstellung, wenn die Spindel (20) soweit verschoben wurde, daß sie die Ausgangsöffnung (15) völlig verdeckt und somit die Flüssigkeit sie die Ausgangsöffnung (15) völlig verdeckt und somit die Flüssigkeit am Austreten hindert.

Der erfindungsgemäße Verteiler kann für jegliche, viskose Flüssigkeit verwendet werden, die von einer einzelnen Zuleitung selektiv auf eine Mehrzahl von Ausgangsleitungen zu verteilen ist. Die Spaltbreiten k und (k + d) sind um so größer, je höher die Viskosität der Flüssigkeit ist. Eine bevorzugte Anwendung ist die Verteilung einer Polymerschmelze auf eine Vielzahl von Extrusionspositionen oder von Schmelzspinneinheiten. Beispiele solcher Polymerer sind Polyethylenterephthalat, Polybutylenterephthalat, Polyamid-6, Polyamid-6.6, Polyolefine und Copolymere hiervon. In diesem Fall müssen der Verteiler und die Polymerleitungen von einem oder mehreren Heizmänteln (40), in denen ein geeignetes Wärmeträgermedium zirkuliert, umgeben sein. Andere Beheizungsarten, beispielsweise Heizbänder, können ebenfalls verwendet werden.

Die Ausgangsventile und -leitungen können beliebig angeordnet werden, vorzugsweise radial zu einer zentralen Zuleitung (Fig. 2) oder nebeneinander, senkrecht zur Zuleitung. Die Anzahl der mit der Zuleitung verbundenen Ausgangsventile und -leitungen wird bei radialer Anordnung durch den Umfang der Zuleitung und bei nebeneinanderliegender Anordnung durch den natürlichen Druckverlust der in der Zuleitung strömenden Flüssigkeit begrenzt.

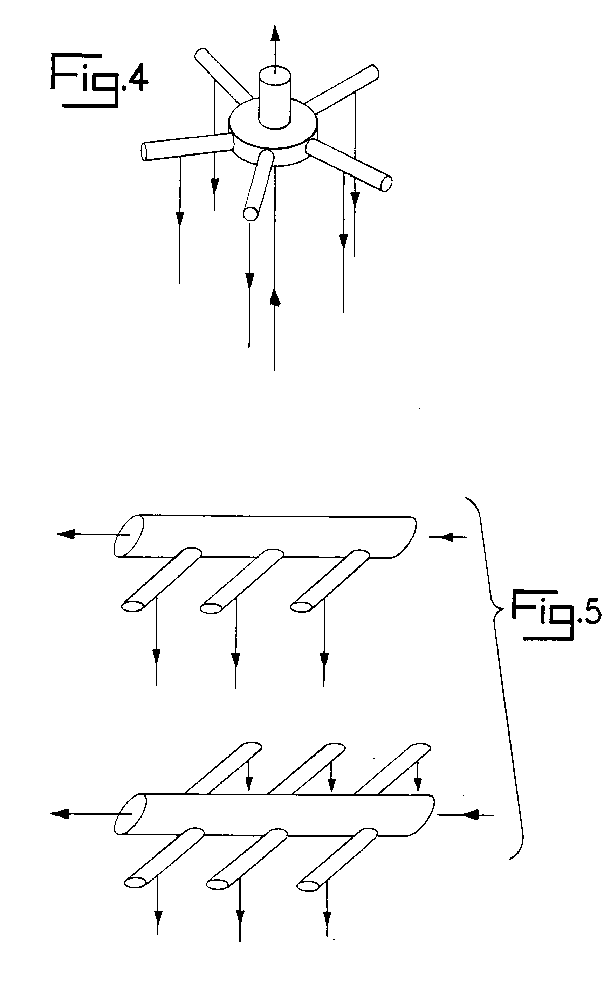

Fig. 4 und 5 zeigen schematisch die Strömungsrichtung bei radialer Anordnung bzw. bei nebeneinanderliegender Anordnung. Die nach unten gerichteten Pfeile entsprechen der Strömung in den, beispielsweise mit Spinneinheiten verbundenen, Ausgangsleitungen. Der stärkere, nach oben bzw. horizontal orientierte Pfeil entspricht der Strömung in der Zuleitung. Die viskose Flüssigkeit fließt von einer Vorratseinheit, zum Beispiel einem Polymerisationsreaktor oder einer Granulatschmelzvorrichtung, bis zu den Verbindungsstellen mit den Ausgangsventilen und -leitungen, und darüber hinaus über ein nicht gezeigtes Mengenregelventil zu einem Sammelbehälter oder im Fall von Polymer, zu einer Granuliervorrichtung.

Bei geöffneten, erfindungsgemäßen Ventilen fließt die Hauptmenge der viskosen Flüssigkeit über die Ventile zu den Ausgangsleitungen. Ein kleinerer Teil (weniger als 20 %) der Flüssigkeit fließt jedoch kontinuierlich zum Sammelbehälter oder zur Granuliervorrichtung. Die Verweilzeit dieses kleineren Teiles in der Zuleitung ist gering, so daß dieser Teil ohne Nachteil in die Vorratseinheit rückgeführt oder anderweitig verwendet werden kann. Die kontinuierliche Strömung verhindert das Stagnieren und die daraus resultierende Beeinträchtigung der Qualität der Flüssigkeit in dem den Ausgangsventilen benachbarten Bereich der Zuleitung. Bei geschlossenen Ventilen, jedoch weiter zuströmender Flüssigkeit, wie beispielsweise bei kurzzeitigem Stillstand der Spinneinheiten, fließt die gesamte viskose Flüssigkeit zum Sammelbehälter oder zur Granuliervorrichtung. Durch die dann frei in die Zuleitung hineinragenden, pilzförmigen Ventilkopfaufsätze wird der Flüssigkeitsdruck in der Zuleitung erhöht und dadurch der Spüleffekt in der Zuleitung verbessert.

## Patentansprüche

1. Verteiler für viskose Flüssigkeiten bestehend aus einer Zuleitung und einer Mehrzahl von mit der Zuleitung verbundenen Ventilen, wobei jedes Ventil ein Gehäuse mit einem als Führungszylinder ausgebildeten Teil mit einem Durchmesser b, eine in einer Ausgangsleitung mündende Ausgangsöffnung mit einem Durchmesser a und eine im Führungszylinder zwischen den Positionen geöffnetes und geschlossenes Ventil bewegliche Ventilspindel umfaßt, **dadurch gekennzeichnet, daß**
- der Führungszylinder auf der der Ausgangsöffnung gegenüberliegenden Seite exzentrisch erweitert ist zu einem elliptischen Querschnitt mit einem maximalen Durchmesser (b + d) von etwa (1,1 bzw. 1,2) · b, einer axialen Länge c des erweiterten Bereichs von etwa (0,8 bis 1,0) · a und einem allmählichen Übergang der Wandung zwischen kreisförmigem und elliptischem Querschnitt,
- die Ventilspindel einen Ventilkopf mit einem pilzförmigen Aufsatz mit Fuß und Kappe hat, wobei die Gesamthöhe f von der Basis des Ventilkopfes bis zur Kappe an der Stelle ihres maximalen Durchmessers t etwa gleich (1,0 bis 1,05) · a und der Durchmesser t etwa gleich (0,75 bis 0,95) · b ist,
- und der Ventilkopfaufsatz bei geschlossenem Ventil in die Zuleitung hineinragt und bei geöffnetem Ventil eine stärkere Flüssigkeits-Strömung auf der erweiterten Seite des Führungszylinders als auf der der Ausgangsöffnung benachbarten Seite bewirkt.

2. Verteiler für viskose Flüssigkeiten gemäß Anspruch 1, dadurch gekennzeichnet, daß die Ventilspindel zur Regelung der Gesamtströmung der viskosen Flüssigkeit und des Verhältnisses der Strömung auf der erweiterten Seite zu der auf der der Ausgangsöffnung benachbarten Seite einstellbar ist.

3. Verteiler für viskose Flüssigkeiten gemäß Anspruch 2, dadurch gekennzeichnet, daß die Ventilspindel so eingestellt ist, daß das Verhältnis der Strömung auf der erweiterten Seite zu der auf der der Ausgangsöffnung benachbarten Seite im Bereich von 1,1 bis 2,5 liegt.

4. Verteiler für viskose Flüssigkeiten gemäß Anspruch 3, dadurch gekennzeichnet, daß die Ventilspindel so eingestellt ist, daß das Verhältnis der Strömungen etwa 2,0 beträgt.

5. Verteiler für viskose Flüssigkeiten gemäß einem der Ansprüche 1 bis 4, dadurch gekennzeichnet, daß die mit der Zuleitung verbundenen Ventile radial um diese Zuleitung herum angeordnet sind.

6. Verteiler für viskose Flüssigkeiten gemäß einem der Ansprüche 1 bis 4, dadurch gekennzeichnet, daß die mit der Zuleitung verbundenen Ventile nebeneinander, senkrecht zu dieser Zuleitung angeordnet sind.

7. Verteiler für viskose Flüssigkeiten gemäß einem der Ansprüche 1 bis 6, dadurch gekennzeichnet, daß der Verteiler von mindestens einem Heizmantel oder von Heizbändern umgeben ist.

8. Verteiler für viskose Flüssigkeiten gemäß einem der Ansprüche 1 bis 7, dadurch gekennzeichnet, daß
- im Längsschnitt der erweiterte Bereich des Führungszylinders die Form eines unregelmäßigen Trapezes hat, wobei die Wandungen des Übergangs zwischen zylindrischem und erweitertem Bereich auf der Seite der Zuleitung einem Winkel von etwa 20° und auf der anderen Seite einem Winkel von etwa 60°, bezogen auf die Achse des Führungszylinders, bilden, die Tiefe d etwa gleich 0,165 · b und die axiale Länge c etwa gleich 0,92 · a ist,
- und der pilzförmige Ventilkopfaufsatz einen Durchmesser e des Fußes von etwa 0,30 · b, einen Durchmesser t der Kappe von etwa 0,85 · b, eine Höhe g des Fußes von etwa 0,54 · a und eine Höhe h der Kappe von etwa 0,60 · a hat, wobei die Kappe an ihrer oberen Spitze einen Winkel von etwa 45° mit der Achse des Führungszylinders bildet.

## Claims

1. Distributor for viscous liquids consisting of a feed pipe and a number of valves linked to the feed pipe, wherein each valve includes a section with diameter b, designed as a housing with a guide cylinder, a discharge opening with diameter a opening into a discharge pipe and a valve rod which can move in the guide cylinder between the valve open and valve closed positions, characterised in that
- the guide cylinder is eccentrically widened on the side opposite to the discharge opening to form an elliptical cross-section with a maximum diameter (b + d) of about (1.1 or 1.2)·b, an axial length c in the widened region of about (0.8 to 1.0)·a and the cross section of the wall undergoes a gradual transition between circular and elliptical,
- the valve rod has a valve block with a mushroom-shaped top section consisting of pedestal and cap, wherein the total height f from the base of the valve block to the cap at the point of its maximum diameter t is approximately equal to (1.0 to 1.05)·a and the diameter t is approximately equal to (0.75 to 0.95)·b,
- and the valve block top section projects into the feed pipe when the valve is closed and produces a larger liquid flow on the widened side of the guide cylinder than on the side adjacent to the discharge opening when the valve is open.

2. Distributor for viscous liquids according to Claim 1, characterised in that the valve rod can be adjusted to regulate the overall flow of viscous liquid and the ratio of the flow on the widened side to that on the side adjacent to the discharge opening.

3. Distributor for viscous liquids according to Claim 2, characterised in that the valve rod is adjusted so that the ratio of the flow on the widened side to that on the side adjacent to the discharge opening is in the range 1.1. to 2.5.

4. Distributor for viscous liquids according to Claim 3, characterised in that the valve rod is adjusted so that the ratio of the flows is about 2.0.

5. Distributor for viscous liquids according to one of Claims 1 to 4, characterised in that the valves linked to the feed pipe are arranged radially around this feed pipe.

6. Distributor for viscous liquids according to one of Claims 1 to 4, characterised in that the valves linked to the feed pipe are arranged alongside each other, perpendicular to this feed pipe.

7. Distributor for viscous liquids according to one of Claims 1 to 6, characterised in that the distributor is surrounded by at least one heating jacket or by strip heaters.

8. Distributor for viscous liquids according to one of Claims 1 to 7, characterised in that
- in longitudinal section, the widened region of the guide cylinder has the shape of an irregular trapezium, wherein the walls in the transition region between cylindrical and widened region on the side of the feed pipe form an angle of about 20° and on the other side form an angle of about 60°, with reference to the axis of the guide cylinder, the depth d being about 0.165 ·b and the axial length c being about 0.92 ·a,
- and the mushroom-shaped valve block top section has the following dimensions, diameter e of the pedestal is about 0.30 ·b, diameter t of the cap is about 0.85 ·b, height g of the pedestal is about 0.54 ·a and height h of the crown is about 0.60 ·a, wherein the upper apex of the cap forms an angle of about 45° with the axis of the guide cylinder.

## Revendications

1. Distributeur pour des liquides visqueux, constitué par une conduite d'amenée et par une pluralité de vannes reliées à la conduite d'amenée, chacune des vannes comprenant un boîtier avec une partie d'un diamètre b réalisée en forme de cylindre de guidage, une ouverture de sortie d'un diamètre a débouchant dans une conduite de sortie, et une broche de vanne mobile dans le cylindre de guidage entre les positions ouverte et fermée de la vanne, caractérisé en ce que :
- le cylindre de guidage est élargi de façon excentrique sur un côté opposé à l'ouverture de sortie pour former une section elliptique avec un diamètre maximum (b + d) d'environ (1,1 à 1,2) · b, une longueur axiale c de la région élargie d'environ (0,8 à 1,0) · a, et avec une transition progressive de la paroi entre une section circulaire et elliptique,
- la broche de vanne possède une tête de vanne présentant un talon en forme de champignon avec pied et capuchon, et la hauteur totale f depuis la base de la tête de vanne jusqu'au capuchon est à l'emplacement de son diamètre maximum t approximativement égale à (1,0 à 1,05) · a, et le diamètre t est approximativement égal à (0,75 à 0,95) · b,
- et le talon de tête de vanne pénètre jusque dans la conduite d'amenée lorsque la vanne est fermée, et entraîne un écoulement de liquide plus fort sur le côté élargi du cylindre de guidage que sur le côté voisin de l'ouverture de sortie lorsque la vanne est ouverte.

2. Distributeur pour des liquides visqueux selon la revendication 1, caractérisé en ce que la broche de vanne est réglable pour régler l'écoulement total du liquide visqueux et la relation de l'écoulement sur le côté élargi par rapport à celui sur le côté voisin de l'ouverture de sortie.

3. Distributeur pour des liquides visqueux selon la revendication 2, caractérisé en ce que la broche de vanne est réglée de telle sorte que la relation de l'écoulement sur le côté élargi par rapport à celui sur le côté voisin de l'ouverture de sortie est de l'ordre de 1,1 à 2,5.

4. Distributeur pour des liquides visqueux selon la revendication 3, caractérisé en ce que la broche de vanne est réglée de telle sorte que la relation des écoulements est d'environ 2.

5. Distributeur pour des liquides visqueux selon l'une quelconque des revendications 1 à 4, caractérisé en ce que les vannes reliées à la conduite d'amenée sont agencées radialement autour de cette conduite d'amenée.

6. Distributeur pour des liquides visqueux selon l'une quelconque des revendications 1 à 4, caractérisé en ce que les vannes reliées à la conduite d'amenée sont agencées les unes à côté des autres perpendiculairement à cette conduite d'amenée.

7. Distributeur pour des liquides visqueux selon l'une quelconque des revendications 1 à 6, caractérisé en ce que le distributeur est entouré par au moins une enveloppe chauffante ou par des bandes chauffantes.

8. Distributeur pour des liquides visqueux selon l'une quelconque des revendications 1 à 7, caractérisé en ce que :
- la région élargie du cylindre de guidage présente en coupe longitudinale la forme d'un trapèze irrégulier, les parois de la transition entre la région cylindrique et la région élargie formant un angle d'environ 20° sur le côté de la conduite d'amenée, et un angle d'environ 60° sur l'autre côté par rapport à l'axe du cylindre de guidage, et la profondeur d est approximativement égale à 0,165 · b, et la longueur axiale c est approximativement égale à 0,92 · a,
- et le talon de tête de vanne en forme de champignon présente un diamètre e du pied d'environ 0,30. b, un diamètre t du capuchon d'environ 0,85. b, une hauteur g du pied d'environ 0,54 · a et une hauteur h du capuchon d'environ 0,60 · a, et le capuchon forme à sa pointe supérieure un angle d'environ 45° avec l'axe du cylindre de guidage.
